# DEMANDE DE BREVET EUROPEEN

(11) **EP 3 187 831 A1**
(43) Date de publication de la demande: **05.07.2017**
(21) Numéro de dépôt: 16205117.1
(22) Date de dépôt: 19.12.2016
(51) Int. Cl.: G01D 4/00, G01D 5/30

(54) **CAPTEUR DE MESURE DE CONSOMMATION ENERGETIQUE**

(30) Priorité: 24.12.2015 FR 1563308
(71) Demandeur: Engie, 92400 Courbevoie (FR)
(72) Inventeur: CALVEZ, Philippe, 78280 GUYANCOURT (FR); de CREVOISIER, Stanislas, 92300 LEVALLOIS PERRET (FR)
(74) Mandataire: Cabinet Netter

(57) **Abrégé**

Un capteur (1) de mesure de consommation comprenant un boîtier (33) recevant une source laser (5) agencée pour émettre un faisceau incident et un photorécepteur (7) agencé pour convertir une lumière reçue en un signal brut. Une attache (35) fixe le boîtier (33). La source laser (5) émet le faisceau incident vers le compteur de consommation (100), qui renvoie un faisceau réfléchi. Un diffuseur (11) disposé sur le trajet du faisceau réfléchi et à l'écart du trajet du faisceau incident diffuse le faisceau réfléchi de sorte qu'une partie au moins de la lumière diffusée excite le photorécepteur (7). Un circuit électrique relié au photorécepteur (7) transforme le signal brut en signal traité. Un microcontrôleur reçoit le signal traité, pour en tirer une durée de saturation, et pour tirer des données de saturation une information de consommation mesurée par le compteur (100).

## Description

L'invention concerne la gestion énergétique et en particulier un capteur de mesure de consommation électrique, de gaz, de chaleur ou d'eau.

La gestion énergétique, en particulier des bâtiments et logements, nécessite d'accéder à des informations récentes de consommation, voire nécessite une mise à jour en temps réel de ces informations.

Pour accéder à ces informations, il est possible de remplacer les compteurs classiques par des compteurs communicants. La fabrication, l'installation et l'entretien des compteurs communicants sont coûteux. En outre, les phases de recherche et de développement de tels compteurs sont longues.

Pour cette raison des capteurs ont été développés pour déterminer la consommation mesurée par les compteurs classiques et rendre ces derniers communicants. Cependant, certains compteurs classiques sont logés dans une enceinte fermée, et ne sont visibles qu'au travers d'une fenêtre, distante de plusieurs centimètres de la portion d'affichage du compteur. Aucun des modules communiquant prévus pour être rapportés sur des compteurs existants ne présente un fonctionnement satisfaisant avec de tel compteurs, notamment les compteurs électriques en usage en Belgique.

L'invention vient améliorer la situation.

La Demanderesse propose un capteur de mesure de consommation comprenant :
- un boîtier recevant une source laser agencée pour émettre un faisceau incident et un photorécepteur agencé pour convertir une lumière reçue en un signal brut,
- une attache agencée pour fixer le boîtier sur un compteur de consommation de telle manière que, dans une position opérationnelle, la source laser émet le faisceau incident vers le compteur de consommation, qui renvoie un faisceau réfléchi,
- un diffuseur disposé sur le trajet du faisceau réfléchi et à l'écart du trajet du faisceau incident, et agencé pour diffuser le faisceau réfléchi de sorte qu'une partie au moins de la lumière diffusée excite le photorécepteur,
- un circuit électrique relié au photorécepteur et agencé pour transformer le signal brut en signal traité, et
- un microcontrôleur agencé pour recevoir le signal traité, pour en tirer une durée de saturation, et pour tirer des données de saturation une information de consommation mesurée par le compteur.

L'installation d'un tel capteur sur un compteur classique permet de le transformer en compteur communicant. L'installation ne nécessite pas de modifier ou d'interagir physiquement avec le compteur. Aucune autorisation spécifique n'est donc nécessaire pour utiliser ce capteur. En outre, ce capteur permet de déterminer la consommation dont les informations sont affichées derrière une fenêtre, ce qui le rend compatible avec la majeure partie des compteurs électriques classiques, y compris lorsqu'ils sont protégés par un boîtier et une fenêtre.

De plus, transformer des compteurs classiques en compteurs communicants est très avantageux car les campagnes de déploiement des compteurs nativement communicants sont extrêmement longues - par exemple 6 ans pour la campagne en cours pour les compteurs électriques en France. Pendant ces périodes de déploiement, les avantages liés aux compteurs communicants sont inaccessibles. L'invention permet d'obtenir un compteur communicant sans campagne de déploiement spécifique, puisque l'utilisateur peut installer lui-même le capteur. Enfin, l'installation comme le retrait du capteur sont aisées.

Dans diverses variantes, le capteur de l'invention pourra présenter une ou plusieurs des caractéristiques suivantes :
- Le boîtier est mobile par rapport à l'attache agencé pour recevoir le signal traité, pour en tirer une durée de saturation, et pour tirer des données de saturation une information de consommation mesurée par le compteur, de manière à faciliter l'observation d'informations affichées sur le compteur de consommation.
- Le microcontrôleur regroupe les données de saturation contiguës temporellement en fonction de leur valeur pour former des vecteurs.
- Le microcontrôleur détermine une information de consommation à détection d'un vecteur associé à une durée de saturation inférieur à un seuil choisi.
- Le microcontrôleur détermine une information de consommation à détection d'un vecteur associé à une durée de saturation supérieure à un seuil choisi.
- Le microcontrôleur détermine une information de consommation en détectant un motif recherché dans une suite de vecteurs.
- Le capteur comprend en outre un témoin de positionnement.
- Le diffuseur est agencé de manière à filtrer la lumière ambiante et laisser le faisceau réfléchi le traverser.
- Le circuit électrique comprend en outre un amplificateur agencé de manière à adapter une valeur seuil en fonction de la luminosité ambiante reçue par le photorécepteur.
- Le capteur comprend en outre une interface agencée en sortie du microcontrôleur et pour transmettre les informations de consommation déterminées par le microcontrôleur.

D'autres caractéristiques, détails et avantages de l'invention apparaîtront à la lecture de la description détaillée ci-après, et des dessins annexés, sur lesquels :
- la figure 1 est une vue de face d'un capteur selon l'invention ;
- la figure 2 est une vue en perspective du capteur de la figure 1 selon une direction opposée ;
- la figure 3 est une vue de dessous de la figure 1 en coupe au niveau du disque d'un compteur sur lequel est installé le capteur ;
- la figure 4 est une représentation schématique du capteur selon l'invention à l'état installé sur un compteur ;
- la figure 5 est un schéma électrique d'une source laser du capteur de la figure 1 ;
- la figure 6 est un schéma électrique d'une partie du capteur de la figure 1 ;
- la figure 7 représente un signal tiré du circuit de la figure 6 ;
- la figure 8 représente un diagramme de flux du fonctionnement du capteur de la figure 1 ;
- la figure 9 représente un diagramme de flux d'une opération de traitement du signal de la figure 7 ;
- la figure 10 représente un diagramme de flux du calcul de consommation pour le compteur de la figure 1 ;
- la figure 11 représente un diagramme de flux du calcul de consommation pour un compteur en variante ; et
- la figure 12 représente un diagramme de flux du calcul de consommation pour un autre compteur en variante.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

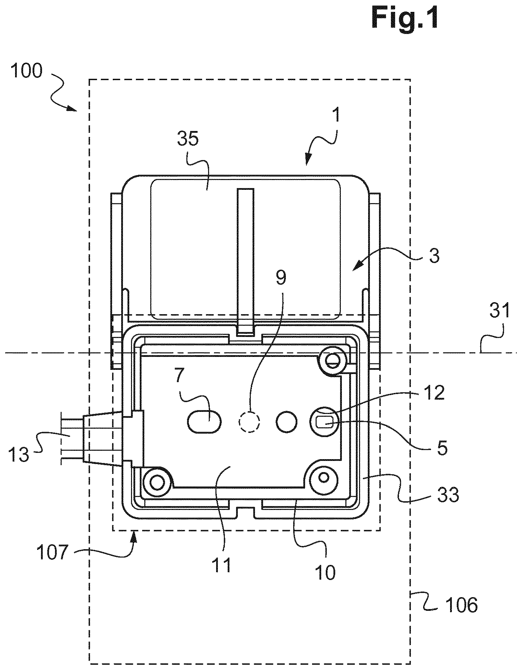

Il est fait référence à la figure 1. Le capteur 1 est prévu pour déterminer la consommation mesurée par un compteur électrique 100. Le compteur 100 est enfermé dans un boîtier 106 qui empêche d'y accéder directement. Le boîtier 106 présente une fenêtre 107 sensiblement en face de la partie du compteur 100 permettant de relever la consommation électrique. La figure 1 représente une vue de face du capteur 1 depuis l'intérieur du boîtier 106. Le boîtier 106 et la fenêtre 107 sont ainsi représentés en trait tireté.

Le capteur 1 comprend un support 3. Le support 3 inclut une partie mobile, ici un boîtier 33, et une partie fixe, ici une platine de fixation 35, ou attache. Le boîtier 33 est relié à la platine de fixation 35 par un pivot dont l'axe de rotation est représenté en trait tireté et référencé 31.

Le capteur 1 est fixé sur le boîtier 106 par le support 3. La platine 35 est fixée sur une portion du boîtier 106 de sorte que, dans une position opérationnelle, le boîtier 33 est sensiblement en regard de la fenêtre 107. Dans l'exemple décrit ici, la platine 35 est collée sur le boîtier 106 par du ruban adhésif. En variante, d'autres moyens de fixation peuvent être utilisés comme des clips, des ventouses ou d'autres liens d'attache au boîtier 106.

Dans la position opérationnelle, une face 10 du capteur 1 est au contact de la fenêtre 107, et la lecture des informations sur le compteur 100 n'est pas possible pour un opérateur.

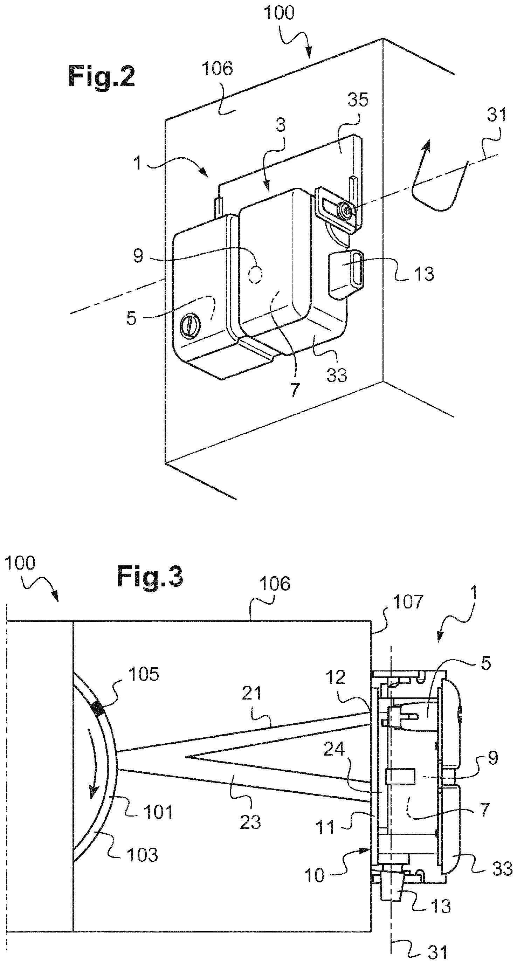

La figure 2 est une représentation en perspective du capteur 1 selon une direction sensiblement opposée à celle de la figure 1, et dans la position opérationnelle.

Comme on peut le voir sur cette figure, le pivot 31 permet de faire pivoter le boîtier 33 dans une position de relève selon la flèche représentée. Dans la position de relève, la face 10 n'est plus au contact de la fenêtre 107. Dans la position de relève, un opérateur peut lire les informations du compteur 100 au travers de la fenêtre 107. Dans l'exemple décrit ici, le pivot 31 comporte un verrou qui permet de bloquer le boîtier 33 dans la position opérationnelle.

En variante, le boîtier 33 est rendu mobile par rapport au boîtier 106 par des clips, des vis, des aimants, une glissière ou encore des attaches à bouclettes et crochets agencés de manière à attacher le boîtier 33 à la platine 35. En variante, le boîtier 33 est amovible.

Il est maintenant fait référence à la figure 3, qui est une vue de dessous du capteur 1, en coupe au niveau de l'affichage des informations du compteur 100.

Dans l'exemple décrit ici, le compteur 100 comprend un disque 101, ou roue, dont la vitesse de rotation est proportionnelle à la consommation électrique instantanée mesurée par le compteur 100. De tels compteurs sont parfois appelés « compteurs Ferraris ». Le disque 101 présente une ou plusieurs marques qui permettent de déterminer le nombre de tours réalisés par le disque, chaque tour signifiant qu'une quantité d'énergie a été consommée. Dans l'exemple décrit ici, le disque 101 comprend une grande portion blanche 103 et une marque noire 105.

Comme décrit plus haut, le compteur 100 est situé dans le boîtier 106, derrière la fenêtre 107. Le boîtier 106 protège le compteur 100 contre des détériorations ou des interventions non autorisées. Ainsi le disque 101 est situé à quelques centimètres derrière la fenêtre 107, environ trois centimètres dans l'exemple décrit ici.

Le capteur 1 comprend une source laser 5 et un photorécepteur 7 qui sont tous deux dans le boîtier 33 du support 3. Comme mentionné plus haut, dans la position opérationnelle, la face 10 est sensiblement en regard de la fenêtre 107. Le capteur 1 est fixé sur le boîtier 106 de sorte que, dans la position opérationnelle, la source laser 5 émet un faisceau incident 21 vers le disque 101. Le faisceau incident 21 traverse la fenêtre 107 du compteur 100 et atteint le disque 101. La portion du faisceau incident 21 qui est réfléchie par le disque 101 forme un faisceau réfléchi 23.

Dans l'exemple décrit ici, la source laser 5 émet une lumière dont la longueur d'onde est d'environ 660nm et présente une puissance d'environ 3mW. La source laser 5 émet des impulsions d'environ 300µs de durée à une fréquence d'environ 30Hz.

De tels lasers à faible puissance suffisent pour traverser la fenêtre des compteurs électriques existants, tout en présentant un risque quasi nul pour la sécurité des usagers. En variante, d'autres types de sources laser peuvent être mises en oeuvre, en tenant compte des caractéristiques du photorécepteur 7. La puissance et/ou la longueur d'onde peuvent aussi être adaptées en fonction des caractéristiques de la fenêtre 107.

Dans l'exemple décrit ici, la face 10 comprend sur toute sa surface un diffuseur 11 qui est traversé par le faisceau réfléchi 23. Le diffuseur 11 présente un trou traversant en regard de la source laser 5. Ainsi, le faisceau incident 21 atteint la fenêtre 107 sans interagir avec le diffuseur 11.

Le photorécepteur 7 est placé derrière le diffuseur 11, de sorte que ce dernier est situé entre la fenêtre 107 et le photorécepteur 7. Le faisceau réfléchi 23 peut présenter une dispersion directionnelle importante du fait de la qualité de la source laser 5 et de la forme du disque 101. La structure et la composition du diffuseur 11 sont sélectionnées de sorte que le faisceau réfléchi 23 soit en partie diffusé et s'élargisse. Le faisceau qui traverse le diffuseur 11 vers le photorécepteur 7 est appelé faisceau transmis 24. Même lorsque le faisceau réfléchi 23 et le photorécepteur 7 sont désalignés, le photorécepteur 7 reçoit au moins une partie du faisceau transmis 24. Le diffuseur 11 permet donc d'augmenter la tolérance de positionnement du capteur 1 sur le compteur 100.

En outre, le diffuseur 11 est agencé pour filtrer la lumière ambiante et favoriser le passage du faisceau réfléchi 23. Notamment, la composition du diffuseur 11 est sélectionnée pour favoriser le passage de la longueur d'onde de la source laser 5 et filtrer les autres longueurs d'ondes. Ainsi, les signaux issus du photorécepteur 7 sont peu parasités par la lumière ambiante. Dans l'exemple décrit ici, le diffuseur 11 est réalisé à base de polyoxyméthylène (POM).

La source laser 5 et le photorécepteur 7 sont disposés dans le boîtier 33 à une distance fixe l'un de l'autre. Le capteur 1 est fixé sur le boîtier 106 de sorte que le faisceau transmis 24 soit sensiblement centré sur le photorécepteur 7. Ainsi, le faisceau réfléchi 23 issu du disque 101 traverse la fenêtre 107, puis le diffuseur 11 pour former le faisceau transmis 24 qui atteint le photorécepteur 7.

En fonctionnement, l'intensité du faisceau réfléchi 23, et donc celle du faisceau transmis 24, dépend de la surface sur laquelle le faisceau incident 21 est réfléchi. Lorsque le faisceau incident 21 est réfléchi sur la portion blanche 103 du disque 101, l'intensité du faisceau réfléchi 23 est élevée. Lorsque le faisceau incident 21 est réfléchi sur la marque noire 105 du disque 101, l'intensité du faisceau réfléchi 23 est faible.

La variation de l'intensité captée par le photorécepteur 7 permet donc de déterminer si la source laser 5 a illuminé la portion blanche 103 ou la marque noire 105 du disque 101, ce qui permet de connaître la consommation électrique mesurée par le compteur 100.

Le capteur 1 comprend en outre un témoin 9 de positionnement. Le témoin 9 inclut ici une diode de couleur verte, qui est agencée pour être allumée lorsque le photorécepteur 7 reçoit un faisceau transmis 24 en réponse à l'émission d'un faisceau incident 21, notamment au cours de l'installation du capteur 1. Le témoin 9 est logé dans le boîtier 33 de manière à être visible depuis la face opposée à la face 10. Ainsi, la personne installant le capteur 1 peut vérifier facilement le bon positionnement du capteur 1 avant de fixer définitivement la platine 35 sur le compteur 100. Une fois le capteur 1 installé sur le compteur 100, le témoin 9 peut être désactivé, notamment à l'état opérationnel du capteur 1. En variante, le témoin 9 reste actif en fonctionnement et devient un témoin de fonctionnement.

La source laser 5 comprend une vis de réglage accessible depuis l'extérieur du boîtier 33 et visible par exemple sur la figure 2. La vis de réglage agit sur une lentille de la source laser 5 de manière à modifier la direction d'émission, ce qui permet d'ajuster de manière fine son orientation. Ainsi, après fixation de la platine 35 sur la fenêtre 107 du compteur 100, il est possible de corriger l'orientation du faisceau incident 21 si cela est nécessaire.

Le capteur 1 comprend également une interface 13, ici sous la forme d'une prise. L'interface 13 est agencée pour transmettre les informations relatives à la consommation électrique mesurée par le compteur 100 et déterminées par le capteur 1. Dans l'exemple décrit ici, la prise forme également une arrivée d'alimentation électrique pour le capteur 1.

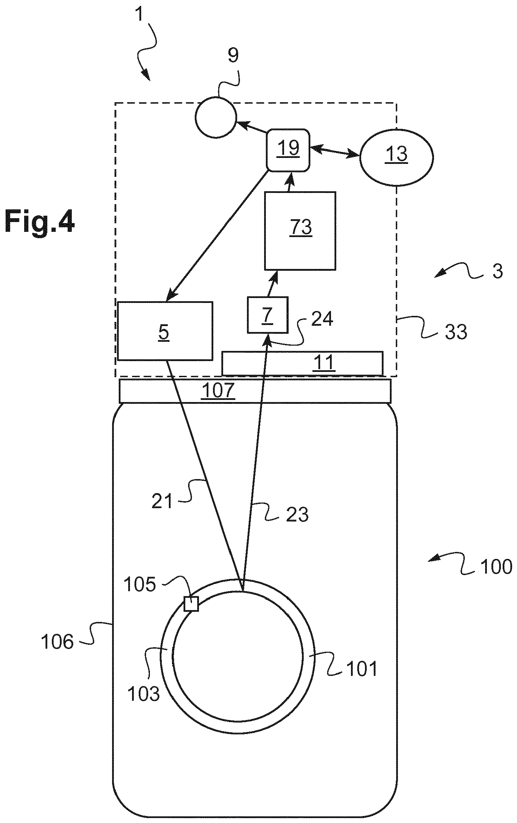

Comme représenté en figure 4, le capteur 1 est comprend un microcontrôleur 19 logé dans le boîtier 33, qui commande la source laser 5, le témoin 9 et une interface 13. Le capteur 1 comprend également un circuit 73 qui traite le signal issu du photorécepteur 7 et transmet un signal exploité par le microcontrôleur 19 pour déterminer la consommation mesurée par le compteur 100.

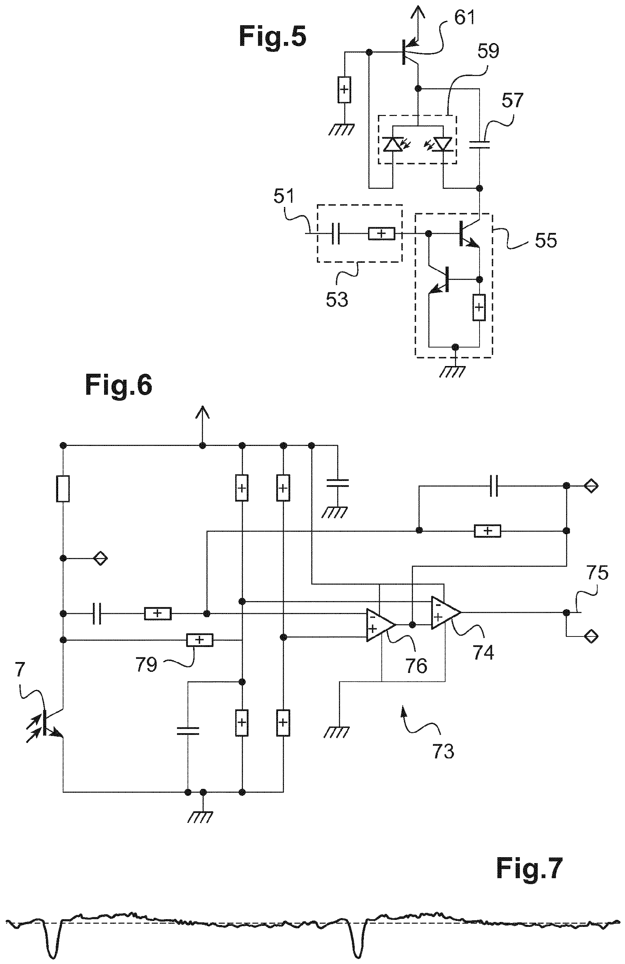

Il est maintenant fait référence à la figure 5 représentant un schéma électrique de la source laser 5. La source laser 5 présente une entrée 51 par l'intermédiaire de laquelle le microcontrôleur 19 la commande. L'entrée 51 est reliée à un premier ensemble 53 comprenant un condensateur et une résistance en série. Le premier ensemble 53 empêche que la source laser 5 émette un faisceau incident 21 en continu, par exemple en cas de dysfonctionnement du microcontrôleur 19.

La source laser 5 comprend, en aval du premier ensemble 53, un second ensemble 55 comprenant deux transistors et une résistance, qui forme un limiteur de courant. Le second ensemble 55 protège la source laser 5 contre une surcharge.

La source laser 5 comprend, en aval du second ensemble 55, un condensateur 57. Le condensateur 57 empêche, à l'allumage, que le premier pic de courant atteigne des diodes 59 de la source laser 5 dans le temps de réponse du limiteur de courant. Ainsi, les diodes 59 de la source laser 5 sont également protégées lors du démarrage.

Enfin, la source laser 5 comprend les diodes 59, qui émettent la lumière à l'origine du faisceau incident 21, et un transistor 61 qui forme un limiteur de sortie optique par le biais d'une boucle de contrôle utilisant le courant issu du photorécepteur.

Il est maintenant fait référence à la figure 6 qui représente un schéma électrique relatif au photorécepteur 7 et au circuit électrique 73 disposé en sortie de ce dernier.

Le circuit électrique 73 comprend une partie agencée pour amplifier le signal brut en sortie du photorécepteur 7, ici au moyen d'un montage à amplificateur opérationnel 74 qui alimente une sortie 75 avec le signal traité vers le microcontrôleur 19. Afin de limiter les effets de la lumière ambiante sur les mesures du capteur 1, un montage à amplificateur opérationnel 76 est prévu entre la sortie du photorécepteur 7 et le montage à amplificateur opérationnel 74, afin d'adapter le seuil en fonction de la saturation du photorécepteur 7.

Dans l'exemple décrit ici, le signal traité prend la forme d'une tension dont la valeur varie au cours du temps avec l'intensité lumineuse reçue par le photorécepteur 7. Un exemple de la tension en fonction du temps correspondant au signal traité est représenté en figure 7. Lorsque la luminosité reçue dépasse la valeur de saturation du photorécepteur 7, alors la tension en sortie atteint un niveau maximum, ou tension de saturation.

Dans l'exemple de la figure 1, le microcontrôleur 19 est agencé pour piloter la source de lumière 5 et pour recevoir le signal traité en sortie 75 du circuit 73. Il envoie à l'interface 13 un nombre qui dépend du signal traité.

Le signal traité est ensuite interprété par le microcontrôleur 19 pour en tirer un signal de durée de saturation. En effet, contrairement aux capteurs connus, le capteur 1 ne cherche pas à tirer des informations directement du photorécepteur 7. Ainsi, lorsque le signal traité dépasse un seuil choisi, une interruption (au sens informatique) est déclenchée dans le microcontrôleur 19, jusqu'à ce que le signal sur la sortie 75 repasse en dessous du seuil choisi. C'est la durée entre ces deux interruptions qui constitue le signal utilisé par le microcontrôleur 19 pour déterminer la mesure de consommation du compteur 100.

Ainsi :
- entre deux impulsions, le signal traité sur la sortie 75 est nul, et rien ne se passe dans le microcontrôleur 19,
- si pendant une impulsion, la portion du disque en regard du capteur 1 est très réfléchissante (par exemple la portion blanche 103), alors le signal sur la sortie 75 va dépasser le seuil choisi pendant la quasi-totalité de l'impulsion, et le microcontrôleur 19 va en tirer une durée de saturation élevée,
- si pendant une impulsion, la portion du disque en regarde du capteur 1 n'est pas très réfléchissante (par exemple la marque noire 105), alors le signal sur la sortie 75 va être faible et ne va dépasser le seuil choisi que pendant une faible durée de l'impulsion, et le microcontrôleur 19 va en tirer une durée de saturation basse.

Le signal traité est donc transformé par le circuit 73 et le microcontrôleur 19 en échantillons représentant chacun la durée de saturation du photorécepteur 7.

La figure 7 représente un exemple de signal de durée de saturation dans le microcontrôleur 19 en fonction du temps. Sur ce schéma, les différentes durées de saturation sont représentées en ordonnées, et ordonnées temporellement en abscisse. Le trait en pointillé représente la valeur moyenne du signal.

Sur cette figure, on reconnaît bien le profil d'un compteur Ferrari : la plupart du temps, la durée de saturation est importante, puisque la portion blanche 103 forme la plus grande partie de la périphérie du disque 101, tandis que, localement, la durée de saturation s'effondre, au niveau de la marque noire 105.

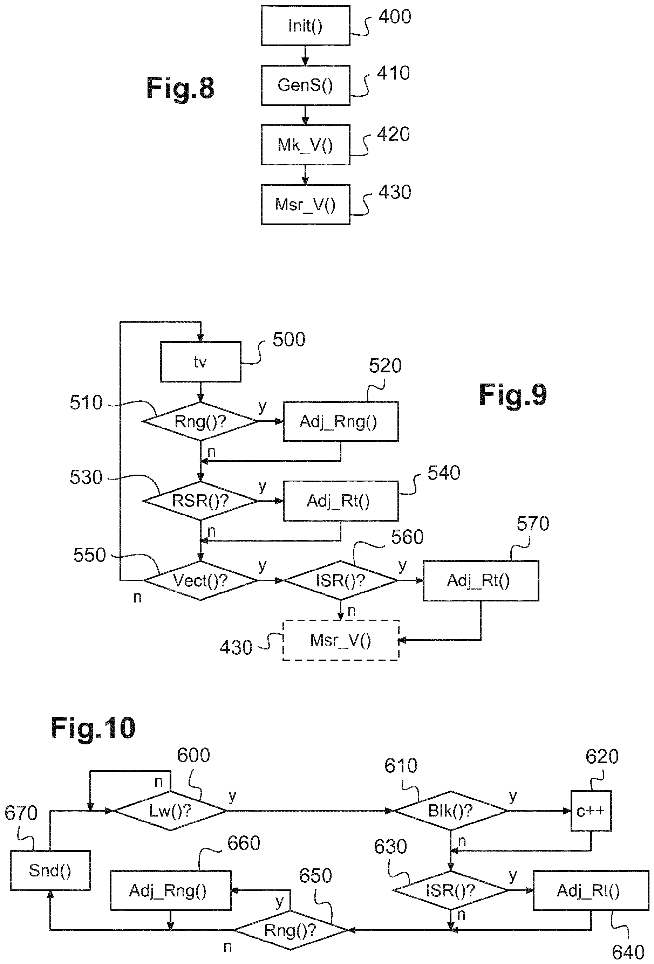

La figure 8 va maintenant être décrite afin de décrire schématiquement le fonctionnement du capteur 1.

Dans une opération 400, le microcontrôleur 19 initialise le capteur 1. Cette initialisation implique la détermination du type de compteur sur lequel le capteur 1 est installé. Cette détermination peut être automatisée ou manuelle.

Une fois que le type de compteur est déterminé, le microcontrôleur 19 détermine les paramètres opérationnels pour la source de lumière 5 et/ou certains paramètres pour le circuit 73. Enfin, en fonction du type de compteur déterminé, le microcontrôleur 19 effectue des opérations d'initialisation de mesure qui seront décrites plus bas.

Ensuite, dans une opération 410, le microcontrôleur 19 commande la source de lumière 5 pour émettre des impulsions de durée déterminée à intervalles déterminés en fonction des résultats de l'opération 400. Typiquement, les impulsions ont une durée de 250µs et sont espacées de 250ms. Cette commande par une fonction GenS(), génère sur la sortie 75 un signal traité qui est transformé par le microcontrôleur 19 en échantillons de durée de saturation, comme décrit plus haut.

Ensuite, dans une opération 420, le microcontrôleur 19 traite les échantillons pour les transformer en vecteurs. Les vecteurs sont les objets qui vont être utilisés pour déterminer la consommation mesurée par le compteur 100. Un vecteur donné regroupe une pluralité d'échantillons consécutifs qui sont considérés comme semblables. Cela permet par exemple de gérer le fait que la vitesse de rotation du disque du compteur 100 n'est pas constante, et que le signal de durée de saturation est tassé ou élargi en fonction de l'évolution de cette vitesse.

Pour cela, le microcontrôleur 19 exécute une fonction MkV() dont un exemple de réalisation va être décrit en référence à la figure 9.

La fonction MkV() est une boucle qui parcourt les échantillons au fur et à mesure qu'ils sont produits à l'opération 410. Tant que cette boucle détermine que les échantillons consécutifs sont suffisamment semblables, ceux-ci sont regroupés. Dès que ce n'est plus le cas, la fonction MkV() génère un vecteur qui représente les échantillons regroupés.

Ainsi, dans une opération 500, un échantillon tv est reçu. Dans une opération 510, une opération Rng() détermine si une plage dynamique doit être modifiée. En effet, la valeur du signal de durée de saturation des échantillons est convertie en valeur sur 16 bits dans l'exemple décrit ici pour réaliser les calculs. Il faut donc maintenir une plage dynamique qui représente la valeur la plus importante et la valeur la moins importante détectées pour les échantillons tv afin de faire cette conversion.

Lorsqu'un nouvel échantillon tv présente une valeur de signal de durée de saturation supérieure à la valeur maximale ou inférieure à la valeur minimale de la plage dynamique, celle-ci est mise à jour par une fonction Adj_Rng() dans une opération 520. La fonction Adj_Rng() peut également tenir compte d'une évolution du signal de durée de saturation. Par exemple, si tous les échantillons tv ont une valeur importante et que subitement une valeur plus basse que la valeur minimale est détectée, la fonction Adj_Rng() peut ignorer cet échantillon en considérant qu'elle correspond à une mesure accidentelle ou bruitée.

Ensuite, dans une opération 530, le microcontrôleur 19 exécute une fonction RSR() pour déterminer si la fréquence des impulsions doit être diminuée. En effet, lorsque le disque tourne très lentement, un grand nombre d'échantillons vont être émis en rapport à une même zone du disque, ce qui n'a pas d'intérêt et consomme beaucoup d'énergie. Par conséquent, lorsque la fonction RSR() détermine qu'un vecteur en cours de définition contient un nombre élevé d'échantillons, par exemple 1024, une fonction Adj_Rt() est exécutée dans une opération 540 pour diminuer la fréquence des impulsions.

Ensuite, dans une opération 550, une fonction Vect() compare l'échantillon tv aux autres échantillons du vecteur en cours de définition. Dans l'exemple décrit ici, la fonction Vect() détermine si la dérivée du signal de durée de saturation associé à l'échantillon tv a changé de signe. Cette détermination tient compte d'un niveau de bruit estimé, afin de ne pas définir le vecteur à cause d'une variation de signal due au bruit, par exemple la lumière émise à 50Hz pour l'éclairage électrique.

Si c'est le cas, alors le vecteur est défini, et comprend le nombre d'échantillons qui le composent, ainsi que la valeur de durée de saturation du dernier échantillon, convertie sur la plage dynamique. Si ce n'est pas le cas, alors la boucle reprend avec l'opération 500 et la réception d'un nouvel échantillon tv.

Une fois le vecteur défini, le microcontrôleur 19 exécute une fonction ISR() dans une opération 560. La fonction ISR() est similaire à la fonction RSR(), mais en inverse : le but est de déterminer si le disque ne tourne pas trop vite par rapport à la fréquence des impulsions. Si c'est le cas, par exemple si un vecteur ne contient qu'un nombre faible d'échantillons (par exemple 40 points), alors la fonction Adj_Rt() est exécutée dans une opération 570 afin d'augmenter la fréquence des impulsions par la source de lumière 5.

Ensuite, l'opération 420 se termine, et le microcontrôleur 19 exécute une fonction Msr_V() dans une opération 430. La fonction Msr_V() utilise les vecteurs générés à l'opération 420 pour déterminer si le compteur a mesuré un cycle de consommation.

Les figures 10 à 12 représentent trois exemples de mise en oeuvres possibles pour la fonction Msr_V(), chacune adaptée à un type de compteur.

Ainsi la figure 10 représente un exemple de mise en oeuvre de la fonction Msr_V() adaptée aux compteurs Ferraris, comme celui de la figure 1.

Dans ce type de compteur, la mesure par le compteur est, comme on l'a décrit plus haut, restituée par un disque dont la vitesse de rotation varie en fonction de la consommation mesurée. Le disque présente une périphérie entièrement blanche, à l'exception d'une marque noire, qui permet donc de déterminer que le disque a achevé une rotation.

Pour ce type de compteur, le but de la fonction Msr_V() est donc de détecter le signal relation à la marque noire. Comme on peut le voir sur la figure 3, ce signal est distinct, car il génère une grosse chute dans la valeur du signal de durée de saturation.

Dans cet exemple, la fonction Msr_V() vise donc à déterminer une transition vecteur à signal élevé ou « vecteur haut » vers vecteur à signal faible ou vecteur bas.

Pour cela, à l'initialisation du capteur 1, le microcontrôleur 19 observe une quantité choisie de vecteurs (par exemple 400), et détermine sur ce jeu de vecteurs une valeur de vecteur indiquant la transition entre un vecteur haut et un vecteur bas.

Ensuite, ces vecteurs sont analysés avec la fonction Msr_V() pour ne pas perdre de données. La fonction Msr_V() repose donc sur la détermination d'un vecteur bas suivant un vecteur haut. Pour cela, chaque vecteur est testé par une fonction Lw() dans une opération 600, pour comparer sa valeur à la valeur de vecteur bas. Cette fonction boucle jusqu'à trouver un vecteur satisfaisant.

Si c'est le cas, dans une opération 610, une fonction Blk() est exécutée pour vérifier que le vecteur correspond bien à une marque noire. En effet, un vecteur peut présenter une valeur basse en rapport à un changement de conditions ambiantes, ou à une baisse d'alimentation ou autre, sans pour autant correspondre à une marque noire. La fonction Blk() compare donc la valeur du vecteur à celle des derniers vecteurs pour déterminer si elle en est suffisamment éloignée.

Si c'est le cas, alors dans une opération 620, un compteur de cycle c est incrémenté. Le compteur c contient ainsi en permanence le nombre de tours détectés pour le disque 101.

Ensuite, dans des opérations 630 et 640, le nombre d'échantillons des vecteurs entre le dernier cycle détecté et le cycle qui vient d'être détecté est testé pour ajusté la fréquence d'échantillonnage (c'est-à-dire la fréquence des impulsions de la source de lumière 5), de manière similaire à ce qui a été décrit avec les opérations 560 et 570 de la figure 5. Dans l'exemple décrit ici, l'opération 640 est légèrement différente, en ce qu'elle impose la fréquence d'échantillonnage la plus élevée. Bien que cela induise une légère surconsommation instantanée, cela garantit qu'aucun cycle ne sera raté. De plus, si cette fréquence est trop élevée, est sera rapidement réduite par l'opération 420.

Ensuite, dans une opération 650, la fonction Rng() est exécutée ensemble avec la fonction Adj_Rng() dans une opération 660, comme cela a été décrit avec la figure 5. Cela permet de s'assurer que la plage dynamique est toujours adaptée au signal mesuré, et augmente la fiabilité de la détection.

Enfin, une fonction Snd() est exécutée dans une opération 670. Cette fonction commande une émission par l'interface 13 de données. L'interface 13 est reliée en sortie du microcontrôleur 19. L'interface 13 est agencé pour transmettre un signal dans l'air (sans fil) représentant le nombre de cycles c. Cette transmission est monodirectionnelle. Dans l'exemple décrit ici, le microcontrôleur 19 envoie un nombre à l'interface 13, par exemple une fois par minute environ. Un récepteur distinct du capteur 1 peut alors capter le signal transmis par l'interface 13 pour déterminer des informations de consommation. La mise en oeuvre d'une transmission monodirectionnelle permet une consommation électrique du capteur 1 particulièrement faible. De plus, comme l'interface 13 envoie la valeur c, le signal présente une forme intrinsèque de redondance, et même si un envoi est perdu, le suivant permettra de compenser cette perte. Comme on l'a décrit, l'émission est périodique. Aussi, la fonction Snd() détermine si la période est échue, et commande l'envoi par l'interface 13 le cas échéant. D'autres variantes pourront être envisagées.

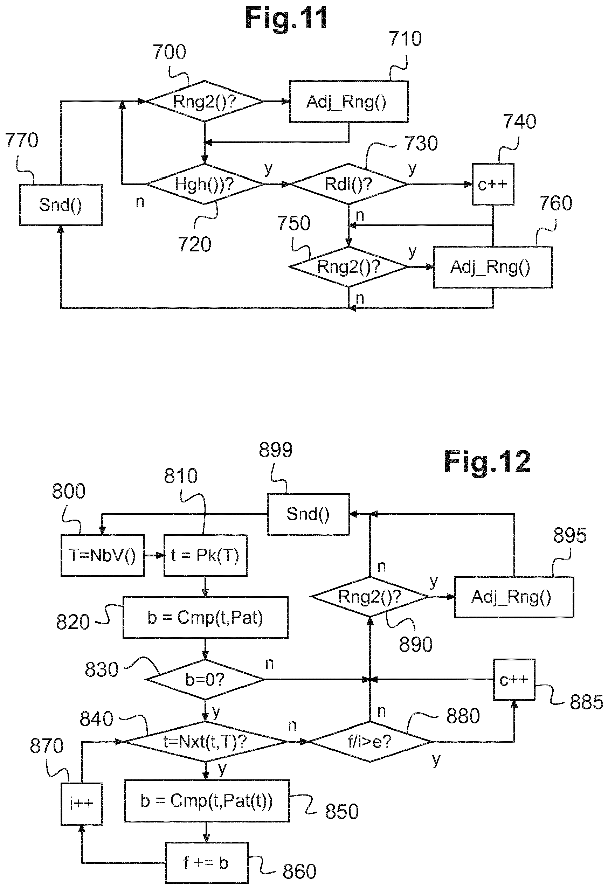

Les figures 11 et 12 représentent des variantes de mise en oeuvre de la fonction Msr_V(). En effet, certains compteurs ne comportent pas de disque comme les compteurs Ferraris, mais une pluralité de rouleaux à chiffres qui représentent directement la consommation mesurée. Dans ces compteurs, seul le rouleau représentant la plus petite unité est entraîné par la mesure, et les autres rouleaux sont incrémentés en conséquence. Par exemple, le rouleau entraîné représente une mesure de type « dixième ». Lorsqu'il fait un tour, il entraîne le rouleau des unités. Lorsque le rouleau des unités fait un tour, il entraîne le rouleau des dizaines, etc. Dans ce type de compteur, le rouleau entraîné présente donc les chiffres 0 à 9 sur sa périphérie, en général en blanc sur fond noir.

Dans certains cas, par exemple des compteurs de gaz, le rouleau entraîné présente en outre une portion réfléchissante, par exemple au niveau des chiffres 0, 6, 8 ou 9. La figure 11 représente un exemple de mise en oeuvre d'une fonction Msr_V() adaptée à ce type de compteur.

Cette situation est assez similaire à celle du compteur Ferrari : on cherche à détecter un évènement très différent de la plupart des évènements. Dans le cas du compteur Ferrari, il s'agit de détecter une marque noire, alors qu'ici il s'agit de détecter une réflexion (due à la portion réfléchissante), beaucoup plus brillante que la réflexion due aux portions noires et blanches définissant les chiffres. L'initialisation est similaire à celle des compteurs Ferraris.

La principale différence réside dans le fait que la plage dynamique doit être maîtrisée, afin de s'assurer que la portion blanche des chiffres n'est pas détectée comme une réflexion, et que la portion réfléchissante est bien détectée par rapport à la portion blanche.

Ainsi, la fonction Msr_V() commence par des opérations 700 et 710 dans lesquelles une fonction Rng2() similaire à la fonction Rng() déjà décrite et la fonction Ad_Rng() sont exécutées. Ici, la fonction Rng2() détermine si le nombre de vecteurs depuis le dernier cycle détecté dépasse une quantité attendue. Si c'est le cas, alors c'est vraisemblablement dû au fait que la plage dynamique est inadaptée et que la portion réfléchissante est mal détectée.

Ensuite, dans une opération 720, une fonction Hgh() détermine si le vecteur courant dépasse le seuil et si le précédent vecteur dépassait également le seuil. Ainsi, si la portion réfléchissante reste longtemps en face du capteur, un seul cycle est déterminé.

Si ce n'est pas le cas, alors la fonction Msr_V() traite le vecteur suivant. Sinon, dans une opération 730, une fonction Rdl() détermine si le vecteur présente une valeur qui dépasse une valeur seuil associée à la portion réfléchissante, par exemple supérieure à la valeur maximale de la plage dynamique.

Si c'est le cas, alors le compteur de cycles c est incrémenté dans une opération 740. Sinon, la fonction Rng2() et la fonction Adj_Rng() sont à nouveau exécutées dans des opérations 750 et 760 pour déterminer si la plage dynamique doit être réajustée. En effet, si celle-ci est mal réglée, des portions blanches des chiffres peuvent déclencher l'incrémentation du compteur de cycles. Mais cela se verra rapidement car de nombreux cycles apparaîtront de manière rapprochée. Dans ce cas, la fonction Adj_Rng() corrigera ce problème et les vecteurs correspondants seront retraités. Enfin, la fonction Snd() est exécutée dans une opération 770, comme pour l'opération 670.

Dans d'autres cas, par exemple des compteurs de gaz ou d'eau, le rouleau entraîné ne présente pas de portion réfléchissante. La figure 12 représente un exemple de mise en oeuvre d'une fonction Msr_V() adaptée à ce type de compteur.

Dans ce cas, pendant l'initialisation, le microcontrôleur 19 va analyser les vecteurs consécutifs afin de détecter un motif. Une fois que ce motif a été déterminé, il va comparer les nouveaux vecteurs par groupe, afin d'essayer d'identifier ce motif dans les nouveaux vecteurs.

Pour cela, dans une opération 800, le microcontrôleur 19 exécute une fonction NbV() dans laquelle un nombre suffisant de vecteurs est accumulé pour former un tableau T dans lequel le motif va être recherché.

Ensuite, une boucle commence dans laquelle le tableau t est progressivement parcouru. Afin d'optimiser les résultats, ce parcours commence dans une opération 810 par l'exécution d'une fonction Pk() qui parcourt le tableau T pour trouver le vecteur qui présente la valeur la plus importante. Cela permet de commencer par un point caractéristique fort du motif, ce qui améliore la qualité de détection.

Ensuite, le vecteur t issu de l'opération 820 est comparé avec le motif déterminé pendant l'initialisation. Cette comparaison est réalisée par une fonction Cmp(), qui cherche à trouver dans le motif un vecteur dont la valeur est proche de celle du vecteur t en entrée, à un emplacement similaire à celui de t dans le tableau T.

Ainsi, la fonction Cmp() va chercher le vecteur v du motif qui a le même indice que le vecteur t dans le tableau T, et les comparer. Si leurs valeurs sont éloignées, par exemple différentes de plus de 1% lorsque converties selon la plage dynamique, alors la fonction Cmp() va comparer les valeurs des vecteurs immédiatement voisins du vecteur v dans le motif, par exemple les trois vecteurs qui suivent le vecteur v. Si l'un de ces vecteurs présente une valeur proche de celle du vecteur t, alors la fonction Cmp() retourne une valeur b égale à 0. Sinon, elle retourne une valeur b égale à 1.

Ensuite, dans une opération 830, un test détermine si l'opération 820 a trouvé un vecteur satisfaisant. Si c'est le cas, alors le reste du tableau T est parcouru pour déterminer si la séquence de vecteurs issue de l'opération 800 correspond au motif.

Ainsi, dans une opération 840, une fonction Nxt() parcourt le tableau T pour trouver le premier vecteur qui est suffisamment différent du vecteur t. Par exemple, il faut que ce vecteur présente une valeur différant d'au moins 1% par rapport au vecteur t.

Ensuite, ce vecteur est recherché dans le motif en exécutant la fonction Cmp() dans une opération 850, et le résultat b est ajouté à un compteur f dans une opération 860. Ainsi, le compteur f stocke toutes les occurrences de vecteurs de T qui n'ont pas été retrouvés dans le motif. Un compteur i est ensuite incrémenté dans une opération 870, et l'opération 840 est répétée, jusqu'à ce que tout le tableau T ait été parcouru.

Une fois que le tableau T a été parcouru, le rapport entre le compteur f et le compteur i est calculé dans une opération 880. Ce rapport indique le pourcentage de vecteurs du tableau T qui n'ont pas été retrouvés dans le motif. Si ce rapport dépasse une erreur e, par exemple 20%, alors il est considéré que le motif n'a pas été reconnu dans le tableau T.

Si le motif a été reconnu, alors le compteur de cycles c est incrémenté dans une opération 885. Sinon, après l'opération 885, ou lorsque l'opération 830 a indiqué un échec de l'opération 820, les fonctions Rng2() et Adj_Rng() déjà décrites sont exécutées dans des opérations 890 et 895, afin d'ajuste la plage dynamique si nécessaire. Enfin la fonction Snd() est exécutée dans une opération 897.

Dans ce qui précède, il apparaît que la figure 8 est une boucle continue pour les opérations 410 à 430. Le microcontrôleur 19 génère en permanence des échantillons avec l'opération 410, puis les transforme en vecteurs dans l'opération 420 et détermine la consommation dans l'opération 430.

Comme cela ressort de ce qui précède, le capteur de l'invention est donc compatible avec une quantité extrêmement importante de compteurs, ce qui est inédit. De plus, sa conception lui permet de présenter une consommation électrique très réduite, qui lui offre une autonomie très importante, tout en utilisant des piles du commerce.

L'invention ne se limite pas aux exemples de capteurs décrits ci-avant, seulement à titre d'exemple, mais elle englobe toutes les variantes que pourra envisager l'homme de l'art dans le cadre des revendications ci-après.

## Revendications

1. Capteur (1) de mesure de consommation comprenant :
- un boîtier (33) recevant une source laser (5) agencée pour émettre un faisceau incident (21) et un photorécepteur (7) agencé pour convertir une lumière reçue en un signal brut,
- une attache (35) agencée pour fixer le boîtier (33) sur un compteur de consommation (100) de telle manière que, dans une position opérationnelle, la source laser (5) émet le faisceau incident (21) vers le compteur de consommation (100), qui renvoie un faisceau réfléchi (23),
- un diffuseur (11) disposé sur le trajet du faisceau réfléchi (23) et à l'écart du trajet du faisceau incident (21), et agencé pour diffuser le faisceau réfléchi (23) de sorte qu'une partie au moins de la lumière diffusée (24) excite le photorécepteur (7),
- un circuit électrique (73) relié au photorécepteur (7) et agencé pour transformer le signal brut en signal traité, et
- un microcontrôleur (19) agencé pour recevoir le signal traité, pour en tirer une durée de saturation, et pour tirer des données de saturation une information de consommation mesurée par le compteur (100).

2. Capteur (1) selon la revendication 1, dans lequel le boîtier (33) est mobile par rapport à l'attache (35) agencé pour recevoir le signal traité, pour en tirer une durée de saturation, et pour tirer des données de saturation une information de consommation mesurée par le compteur (100), de manière à faciliter l'observation d'informations affichées sur le compteur de consommation (100).

3. Capteur selon la revendication 2, dans lequel le microcontrôleur (19) regroupe les données de saturation contiguës temporellement en fonction de leur valeur pour former des vecteurs.

4. Capteur (1) selon la revendication 3, dans lequel le microcontrôleur (19) détermine une information de consommation à détection d'un vecteur associé à une durée de saturation inférieur à un seuil choisi.

5. Capteur (1) selon la revendication 3, dans lequel le microcontrôleur (19) détermine une information de consommation à détection d'un vecteur associé à une durée de saturation supérieure à un seuil choisi.

6. Capteur (1) selon la revendication 3, dans lequel le microcontrôleur (19) détermine une information de consommation en détectant un motif recherché dans une suite de vecteurs.

7. Capteur (1) selon l'une des revendications précédentes, comprenant en outre un témoin (9) de positionnement.

8. Capteur (1) selon l'une des revendications précédentes, dans lequel le diffuseur (11) est agencé de manière à filtrer la lumière ambiante et laisser le faisceau réfléchi (23) le traverser.

9. Capteur (1) selon l'une des revendications précédentes, dans lequel le circuit électrique (73) comprend en outre un amplificateur agencé de manière à adapter une valeur seuil (S) en fonction de la luminosité ambiante reçue par le photorécepteur (7).

10. Capteur (1) selon l'une des revendications précédentes, comprenant en outre une interface (13) agencée en sortie du microcontrôleur (19) et pour transmettre les informations de consommation déterminées par le microcontrôleur (19).
